# EUROPEAN PATENT APPLICATION

(11) **EP 1 475 138 A1**
(43) Date of publication of application: **10.11.2004**
(21) Application number: 03010324.6
(22) Date of filing: 07.05.2003
(51) Int. Cl.: B01D 33/067, B01D 33/50, B01D 33/76

(54) **Filtering device for fluids containing particles of waste materials**

(71) Applicant: Vidali, Marzio, 31040 Chiarano (Treviso) (IT)
(72) Inventor: Vidali, Marzio, 31040 Chiarano (Treviso) (IT)
(74) Representative: Dalla Rosa, Adriano

(57) **Abstract**

The invention relates to a filtering device for fluids containing particles of waste materials of different kind, such as remainders of workings of paints and the like, which device is adapted to filter in an effective, safe and simple manner all the fluids containing such waste materials. Filtering device comprising a rotating filtering drum (6) supported by an outer casing (5) and supplied with the fluid to be cleaned through a pump, in the interior of the same drum, said drum (6) being provided with a filtering net (8) to filter the fluid and separate the particles of waste materials, which remain temporarily attached to the same net. Device comprising also at least one spraying nozzle (24) acting on the filtering net (8) of the drum (6), so that to remove from it the particles of waste materials, which are then collected by a lower hopper (26) introduced in the interior of the drum (6), and subsequently discharged outside, while the so cleaned fluid is collected on a vessel (21) arranged below the drum (6).

## Description

The invention relates to a filtering device for fluids containing particles of waste materials of different kind, such as remainders of workings of paints and the like, which is adapted to filter in an effective, safe and simple manner all the fluids containing such waste materials.

Filtering devices for fluids containig waste materials of different kind are known. In particular, a filtering device constituted by a stationary container provided with a scraper is known, onto which the fluid containing the waste materials is delivered by means of a pump.

The fuid is then added with flocculating agents which provide for separating from the fluid the particles of waste materials, so that to form solid particles on the surface of the fluid, and such solid particles are then separated from the fluid part by moving in an alternate manner the scraper along the surface of the fluid, with consequent removal of such solid particles of waste materials, which are finally discharged on separate containers arranged near the container, while the fluid ca be re-used for other operations.

However, the filtering devices of this kind aren't reliable in operation, in that the solid particles of waste materials aren't separated effectively from the fluid in the course of several filtering operations, so that some particles of waste materials cannot be eliminated from the fluid and always remains mixed with the same fluid, and such devices also require necessarily the use of flocculating agents for separating the particles of waste materials from the fluid.

The object of the invention is to provide for a filtering device adapted to eliminate the drawbacks of the filtering devices used hitherto, which is so constructed as to perform filtering operations of fluids containing waste materials of the kind referred to in an effective, safe and simple manner, and which can operate without the need to use necessarily flocculating agents.

This filtering device is made with the constructive characteristics substantially described in the enclosed patent claims.

The invention will be better understood from the following description, given solely by way of not limiting example, and with reference to the accompanying drawings, wherein :

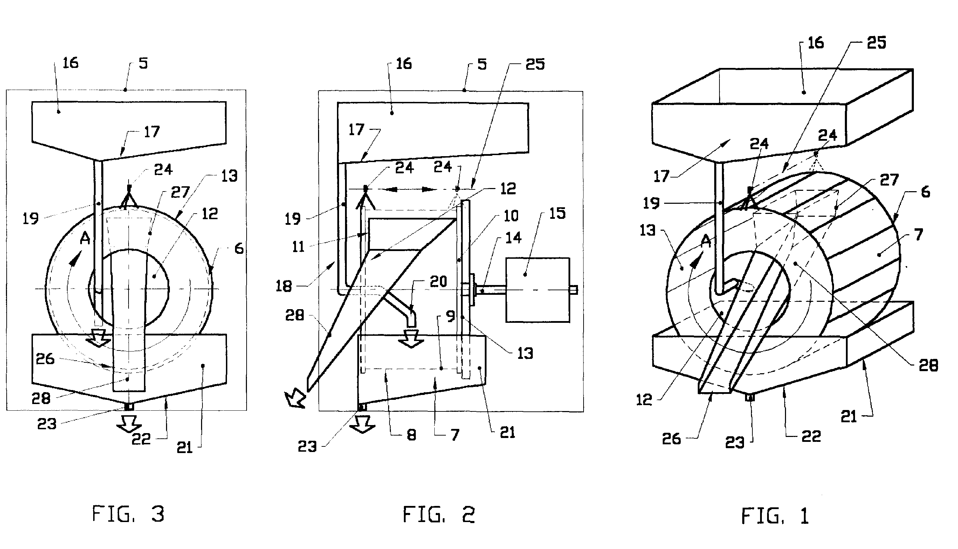

- Fig. 1 shows a schematic perspective view of a filtering device according to the invention ;
- Fig. 2 shows a schematic side view of the filtering device of Fig. 1 ;
- Fig. 3 shows a schematic front view of the filtering device of Fig. 1.

The above Figures schematically represent a filtering device according to the invention, which is adapted to filter fluids in the liquid or gaseous form containing particles of waste materials of different kinds, and particularly but not exclusively particles of remainders of workings of paints and the like, so that to separate in a manner extremely effective, safe and reliable all the particles of waste materials from the fluid, thereby permitting such removed particles of waste materials to be discharged on separate containers and the fluids to be re-used for other working operations.

This filtering device substantially comprises an outer metallic box-like casing 5 supporting a metallic rotating drum 6 with horizontal axis of rotation, which is constituted by a peripheral curved surface 7 formed by a filtering net 8 provided with a plurality of small-sized openings 9 and joined with a vertical back wall 10 and a vertical front wall 11 provided with a central opening 12, permitting the access to the interior of the drum 6, said drum being secured to lateral supporting flanges 13. The drum back wall 10 and the corresponding flange 13 are joined to a horizontal support shaft 14 and connected to an electric motor 15 supplied by the electric circuit of the filtering device and driven in rotation during the whole filtering cycle, in a manner to drive in rotation also the drum 6. The present filtering device also comprises a container 16 supported on the casing 5 on a position situated above the drum 6 and provided with a bottom 17 shaped inclined downward, said container being connected with the interior of the drum 6 through a lower conduit 18, which is extended vertically downward from the bottom 17 in a manner to form a vertical rectilinear portion 19 which is arranged in front of the front flange 13 and slightly spaced away therefrom, and to form a bent portion 20 entering the central opening 12 of the drum 6 and terminating near the perforated peripheral curved surface 7 of the same drum. Moreover, the container 16 is connected through a not visible conduit with a separate container (not shown) in which the fluid with the particles of waste materials is contained, which fluid is sucked from this separate container by means of a not visible pump and delivered by the same toward the container 16, where this fluid is conveyed downward thanks to the inclined bottom 17 of the container and by passing through the conduit 18 is directed in the interior of the drum 6 against the perforated peripheral curved surface 7 thereof, where the small-sized openings 9 of the filtering net 8 provide for filtering and separating from the fluid the particles of waste materials, which particles therefore remain attached to the same net and are eliminated in the manner described hereinafter, while the fluid passes through the net 8 and falls downward. A collecting vessel 21 is arranged below the drum 6 and extended for the entire extension thereof, in a manner to be able to collect the fluid falling from the interior of the drum 6 and passing through the filtering net 8 of the same drum. This vessel 21 is provided with a bottom 22 shaped inclined downward and having at least an outlet opening 23, which can be put into communication with a separate container (also not shown) for collecting the fluid filtered on each cycle. The present filtering device also comprises suitable means for cleaning the drum 6 from the particles of waste materials which are attached to the inner surface of the filtering net 8, and removing such particles as it will be described later on. These cleaning and removing means are formed preferably by one or more fixed or movable spraying nozzles 24 provided on a rectilinear horizontal conduit 25, which is joined with a suitable pneumatic supply system of the present filtering device and is supported by the casing 5 and disposed above the upper part of peripheral surface 7 of the drum 6, slightly spaced away therefrom, such nozzles being spaced away from each other along the entire length of the conduit 25 and being all turned toward the upper part of the drum peripheral surface 7and arranged on a position corresponding to the position of the entire width of the drum 6, so that when the fluid supplied to the conduit 25 is sprayed with a high pressure through the nozzles 24 is directed against the drum peripheral surface 7. Thanks to this arrangement and to the slow rotation speed of the drum 6 in a single direction of rotation (arrow A), the particles of waste materials which are attached to the inner surface of the filtering net 8 and mixed with some fluid, are progressively separated from the fluid which drops downward during the slow rotation speed of the drum 6, and when such particles arrive at the level of the spraying nozzles 24 the jets of pressurized fluid provide for detaching uniformly them from the entire drum inner surface.

A hopper 26 or other suitable means is provided in combination with the drum 6, to collect and discharge the particles of waste materials which are so detached from the drum 6, by falling downward. This hopper 26 is shaped preferably with an upper enlarged portion 27 and an extended inclined portion 28, wherein the enlarged portion 27 is housed in the interior of the drum 6 and slightly spaced away below the upper part of the drum peripheral surface 7, for the entire width of this surface, on a position corresponding to that of all the nozzles 24 of the conduit 25, while the inclined portion 28 is projected downward from such enlarged portion 27 and is passing through the central opening 12 of the drum 6, and terminates near a suitable collecting container (not shown).

In this way, the particles of waste materials which are separated from the fluid and detached from the filtering net 8 by the action of the spraying nozzles 24 fall into the hopper 26 and arrive into the collecting container, where they can be eliminated.

The present filtering device can be used not only for filtering fluids used for painting industries, but also for any other use involving the separation of particles of waste materials of any kind from fluids utilized for other industry fields, thus without departing from the protection sphere of the present invention.

Therefore, the advantages of the present filtering device appear evident. In fact, such device permits to separate continuously and uniformly practically all the particles of waste materials from a fluid, in a simple, quick, effective and reliable manner, with a considerable saving of labour and without the need to use flocculating agents like previously. On the contrary, these flocculating agents can also be used, but aren't necessary, to achieve a better separation of the particles of waste materials from the fluid before being filtered in the present filtering device.

## Claims

1. Filtering device for fluids containing particles of waste materials of different kind, for different industrial uses, and particularly but not exclusively for filtering remainders of workings of paints and the like, in which the fluids containing the waste materials are sucked by pumping means and delivered toward the same device, **characterized by** at least a rotating filtering means (6) supported by an outer casing (5), and co-operating with possible container means (16) communicating with said pumping means for receiving said fluids to be separated from the waste materials, said rotating filtering means (6) being adapted to filter the particles of waste materials contained in the fluid, which particles remain attached temporarily to the same filtering means, and to let the cleaned fluid to be collected on collecting means (21), and
**characterized by** cleaning and removing means (24) and by discharging means (26) co-operating with said rotating filtering means (6) and adapted respectively to clean and remove the particles of waste materials from said filtering means (6) and to collect and discharge outside these cleaned and removed particles of waste materials.

2. Filtering device according to claim 1, **characterized in that** said rotating filtering device comprises a rotating drum (6) preferably with horizontal axis of rotation, constituted by a peripheral curved surface (7) formed by a filtering net (8) provided with a plurality of small-sized openings (9) and joined with a vertical back wall (10) connected to motor means (15) and a vertical front wall (11) provided with a central opening (12), and said container means (16) being provided with at least a conduit (18) entering said central opening (12) for delivering the fluid with the particles of waste materials in the interior of said drum (6).

3. Filtering device according to claim 2, **characterized in that** said collecting means comprises at least a vessel (21) arranged below said drum (6) and extended for the entire extension thereof, said vessel (21) being provided with a bottom (22) shaped inclined downward and having an outlet opening (23) for collecting the filtered fluid.

4. Filtering device according to claim 2, **characterized in that** said cleaning and removing means comprise at least one spraying nozzle (24) provided on a conduit (25) supplied with a fluid, preferably from a pneumatic supply system, which is supported by said casing (5) and disposed above the upper part of said drum peripheral surface (7), slightly spaced away therefrom, said nozzle (24) being turned toward said peripheral surface (7) for spraying to it such fluid with a high pressure during each filtering cycle and under rotation of said drum (6) with a slow rotation speed in a single direction of rotation, in order to detache continuously the particles of waste materials from said peripheral surface (7).

5. Filtering device according to claim 2, **characterized in that** said discharge means comprises at least a hopper (26) provided with an upper enlarged portion (27) and an extended inclined portion (28), wherein said enlarged portion (27) is housed in the interior of said drum (6) and slightly spaced away below the upper part of said drum peripheral surface (7), and said nozzle (24), and said inclined portion (28) is projected downward from said enlarged portion (27) and is passing through said central opening (12) and into communication with a container for collecting and discharging the cleaned and removed particles of waste materials.
